# EUROPÄISCHE PATENTSCHRIFT

(11) **EP 1 899 221 B1**
(45) Veröffentlichungstag und Bekanntmachung des Hinweises auf die Patenterteilung: **24.06.2009**
(21) Anmeldenummer: 06762317.3
(22) Anmeldetag: 30.06.2006
(51) Int. Cl.: B64F 1/22

(54) **FLUGZEUGDEICHSEL**
AIRCRAFT TOW BAR
ELEMENT DE REMORQUAGE D'AVION

(30) Priorität: 01.07.2005 DE 202005010382 U
(43) Veröffentlichungstag der Anmeldung: 19.03.2008
(73) Patentinhaber: GEMÜ Gebrüder Müller Apparatebau GmbH & Co. KG, 74653 Ingelfingen (DE)
(72) Erfinder: MÜLLER, Fritz, 74653 Ingelfingen (DE)
(74) Vertreter: Dreiss
(86) Internationale Anmeldenummer: PCT/EP2006/006385
(87) Internationale Veröffentlichungsnummer: WO 2007/003373

(56) Entgegenhaltungen:
- US-A- 1 754 407
- US-A- 3 581 843
- US-A- 4 463 826

## Beschreibung

Die Erfindung befasst sich mit einer Flugzeugdeichsel, welche insbesondere für Kleinflugzeuge bestimmt ist.

Aus US-A-4,463,826 ist eine Flugzeugdeichsel der gattungsgemässen Art bekannt, welche mehrere gelenkig miteinander verbundene Deichselabschnitte umfaßt, weiche im zusammengelegten Zustand platzsparend im Flugzeug mitgeführt werden kann. Die Flugzeugdeichsel ist dort derart ausgelegt, daß sie zugleich auch als Art Eingangs- und Aussteighilfe genutzt werden kann. Diese Deichsel weist wenigstens einen Deichselabschnitt auf, welcher in Form einer Platte ausgebildet ist, die eine Plattform bilden kann, die als Einstiegs- und Ausstiegshilfe dienen kann. Dieser Deichselabschnitt in Form einer Platte ist an seinen beiden Enden über Gelenke mit jeweils einem weiteren Deichselabschnitt verbunden, wobei die weiteren Deichselabschnitte aus im Querschnitt L-förmig ausgebildetem Profilmaterial ausgebildet sind.

Eine solche Vorrichtung ist auch in US 3 581 843 offenbart.

Die Erfindung zielt darauf ab, eine Flugzeugdeichsel, welche insbesondere für Kleinflugzeuge bestimmt ist, bereitzustellen, welche ein möglichst geringes Eigengewicht hat, im zusammengelegten Zustand wenig Stauraum in Anspruch nimmt und im ausgefalteten Zustand eine für den bestimmungsgemäßen Einsatzzweck ausreichende Eigenstabilität besitzt.

Nach der Erfindung wird hierzu eine Flugzeugdeichsel, welche insbesondere für Kleinflugzeuge bestimmt ist, bereitgestellt, welche mehrere gelenkig miteinander verbundene Deichselabschnitte umfaßt und die im zusammengelegten Zustand platzsparend im Flugzeug mitgeführt werden kann. Nach der Erfindung zeichnet sich die Flugzeugdeichsel dadurch aus, dass die Deichselabschnitte von Rohrmaterial gebildet werden und Querverstrebungen umfassen, und dass die Gelenke an den Verbindungsstellen im ausgefalteten Zustand muffenartig umgriffen sind.

Da bei der erfindungsgemäßen Flugzeugdeichsel die Deichselabschnitte von Rohrmaterial gebildet werden und nur Querverstrebungen vorhanden sind, sind die Deichselabschnitte gewichtsmäßig relativ leicht ausgelegt und haben eine ausreichende Eigenstabilität. Da die Gelenke an den Verbindungsstellen im ausgefalteten Zustand muffenartig umgriffen sind, sind die Deichselabschnitte im ausgefalteten Zustand der Flugzeugdeichsel zu einer stabilen Funktionseinheit verbunden, welche auf Zug und/oder Druck in ausreichendem Maße beansprucht werden kann. Somit gestattet die Flugzeugdeichsel nach der Erfindung einen universellen Einsatz zum Manövrieren eines Kleinflugzeugs beispielsweise.

Vorzugsweise sind die Gelenke im ausgefalteten und/oder im zusammengelegten Zustand der Flugzeugdeichsel arretierbar. Hierdurch wird gewährleistet, daß die Flugzeugdeichsel im ausgefalteten und/oder im zusammengelegten Zustand jeweils eine ausreichende Eigenstabilität besitzt und hierdurch lässt sich die Flugzeugdeichsel auch im zusammengefalteten Zustand ohne Schwierigkeiten transportieren, ohne daß die einzelnen Deichselabschnitte sich während des Transports ausfalten können.

Im ausgefalteten Zustand umgibt zur Arretierung der Deichselabschnitte vorzugsweise eine Schiebemuffe das Rohrmaterial, und sie umschließt die Gelenke benachbarter Deichselabschnitte im ausgefalteten Zustand. Hierdurch kann die Flugzeugdeichsel im ausgefalteten Zustand sowohl Zug- als auch Druckkräfte aufnehmen und die Flugzeugdeichsel bleibt bei den Manövrierarbeiten zuverlässig in ihrem ausgefalteten Zustand.

Vorzugsweise sind die Gelenke der Deichsel derart ausgelegt, daß sie im zusammengelegten Zustand der Deichsel die Deichselabschnitte aufeinander zu liegen kommen. Hierdurch lässt sich die Flugzeugdeichsel in kompakter Weise zusammenlegen und platzsparend zum Mitführen im Flugzeug verstauen.

Gemäß einer bevorzugten Ausführungsform der Erfindung hat jedes Gelenk der Flugzeugdeichsel wenigstens einen Gelenkbolzen am jeweiligen Ende von benachbarten Deichselabschnitten, und die Gelenkbolzen zweier benachbarter Deichselabschnitte sind über ein schwenkbewegliches Verbindungsglied verbunden. Somit umfaßt jedes Gelenk wenigstens zwei Gelenkbolzen und ein schwenkbewegliches Verbindungsglied, um zu ermöglichen, daß im zusammengelegten Zustand die einzelnen Deichselabschnitte dank des Verbindungsgliedes übereinander zu liegen kommen. Da die Gelenkanordnung bei der erfindungsgemäßen Fahrzeugdeichsel im ausgefalteten Zustand vollumfänglich, beispielsweise mittels einer Schiebemuffe umgriffen ist, wird aber trotz der gelenkigen Bewegung die Deichselabschnitte relativ zu einander im ausgefalteten. Zustand erreicht, daß die ausgefalteten Deichselabschnitte stabil und belastbar miteinander verbunden sind.

Beispielsweise kann ein Deichselbabschnitt derart ausgelegt sein, daß sein freies Ende mit einem Bugrad des Flugzeugs verbunden werden kann, während ein weiterer Deichselabschnitt derart ausgelegt sein kann, daß sein freies Ende eine Verbindungseinrichtung für eine Schleppeinrichtung, wie ein Zugfahrzeug oder dergleichen bildet. Auf diese Weise wird erreicht, daß für den jeweiligen Bestimmungszweck ein Ende eines Deichselabschnitts in geeigneter Weise beschaffen ist. Das mit dem Bugrad zu verbindende freie Ende eines der Deichselabschnitte ist zweckmäßigerweise derart ausgelegt, daß eine universelle Anpassung an die jeweilige Bugradauslegung des betreffenden Flugzeugs erreicht wird.

Vorzugsweise sind die Deichselabschnitte aus Rohrmaterial aus rostfreiem Material hergestellt, um eine lange Lebensdauer der Fahrzeugdeichsel sicher zustellen. Insbesondere ist es zweckmäßig, daß das Rohrmaterial der Deichselabschnitte einschließlich der Querverstrebungen aus einem Rohrmaterial hergestellt und zusammengesetzt sind, welches im wesentlichen übereinstimmende Querschnittsabmessungen und Querschnittsformen hat.

Gemäß einer zweckmäßigen Ausgestaltungsform umfaßt die Flugzeugdeichsel wenigstens drei gelenkig miteinander verbundene Deichselabschnitte, so daß jeweils ein Abschnitt der Deichsel zur Verbindung mit der Schleppeinrichtung ausgelegt ist, und zwischen denselben ein im wesentlichen als Verlängerung dienender Zwischen-Deichselabschnitt vorgesehen ist.

Bei der erfindungsgemäßen Fahrzeugdeichsel, welche insbesondere für Kleinflugzeuge bestimmt ist; ist es wesentlich, daß man eine gewichtssparende und stabile Gesamtkonstruktion aus Rohrmaterial hat und die einzelnen Deichselabschnitte möglichst raumsparend zusammengelegt werden können, um eine benutzerfreundliche Mitführung der Flugzeugdeichsel im Flugzeug selbst zu gestatten. Dank der Konstruktion aus Rohrmaterial lässt sich zwar das Eigengewicht einer solchen Flugzeugdeichsel reduzieren, aber dennoch erhält man eine große Festigkeit und Widerstandsfähigkeit sowie eine Flugzeugdeichsel mit guter Verwindungssteifigkeit..

Die Erfindung wird nachstehend anhand einer bevorzugten Ausführungsform unter Bezugnahme auf die beigefügte Zeichnung näher erläutert. Hierbei handelt es sich um ein nicht beschreibendes Ausführungsbeispiel. Die Figuren der Zeichnungen zeigen:
- Figur 1: eine perspektivische Ansicht einer Flugzeugdeichsel in ausge- faltetem Zustand, und
- Figur 2: eine perspektivische Ansicht einer Flugzeugdeichsel in zusam- mengelegtem Zustand.

In den Figuren der Zeichnung sind gleiche oder ähnliche Teile mit denselben Bezugszeichen versehen.

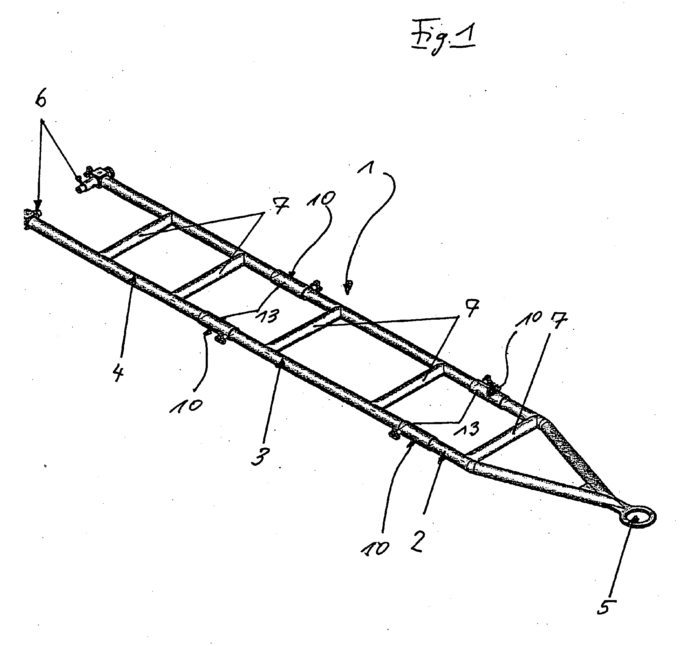

Die Flugzeugdeichsel ist in den Figuren der Zeichnung insgesamt mit dem Bezugszeichen 1 versehen. Wie aus dem ausgefalteten Zustand nach Figur 1 zu ersehen ist, umfaßt die Flugzeugdeichsel 1 drei Deichselabschnitte 2, 3 und 4, welche im ausgefalteten Zustand nach Figur 1 aneinander schließen. Ein Ende des Deichselabschnittes 2 ist beispielsweise als Verbindung zu einer nicht näher dargestellten Schleppeinrichtung ausgelegt, und umfaßt beispielsweise eine Öseneinrichtung 5, welche mit einem Schleppfahrzeug durch Koppeln verbunden werden kann. Der Deichselabschnitt 4 ist an seinem freien Ende derart ausgelegt, daß er in geeigneter Weise mit dem Bugrad eines Flugzeugs, insbesondere eines Kleinflugzeugs, verbunden werden kann. Hierzu sind entsprechend geeignete universell verstellbare Kopplungselemente 6 vorgesehen. Zwischen dem Deichselabschnitt 2 und dem Deichselabschnitt 4 ist ein weiterer Deichselabschnitt 3 angeordnet. Die Deichselabschnitte 2 sind zweckmäßigerweise aus Rohrmaterial, vorzugsweise aus rostfreiem Material, hergestellt und umfassen Querverstrebungen 7. Diese Querverstrebungen_ 7 sind zweckmäßigerweise aus demselben, auch hinsichtlich der Querschnittsgröße und der Querschnittsform, Rohrmaterial wie die Längsabschnitte der Deichselabschnitte 2, 3 und 4 ausgelegt. Somit hat die Ftugzeugdeichset 1 in dem in Figur 1 dargestellten ausgefalteten Zustand eine leiterförmige Konstruktion, so daß die einzelnen Deichselabschnitte 2, 3 und 4 für sich gesehen und in Verbindung miteinander eine ausreichende Eigensteifigkeit zur Übertragung von Zug- und/oder Druckkräften haben.

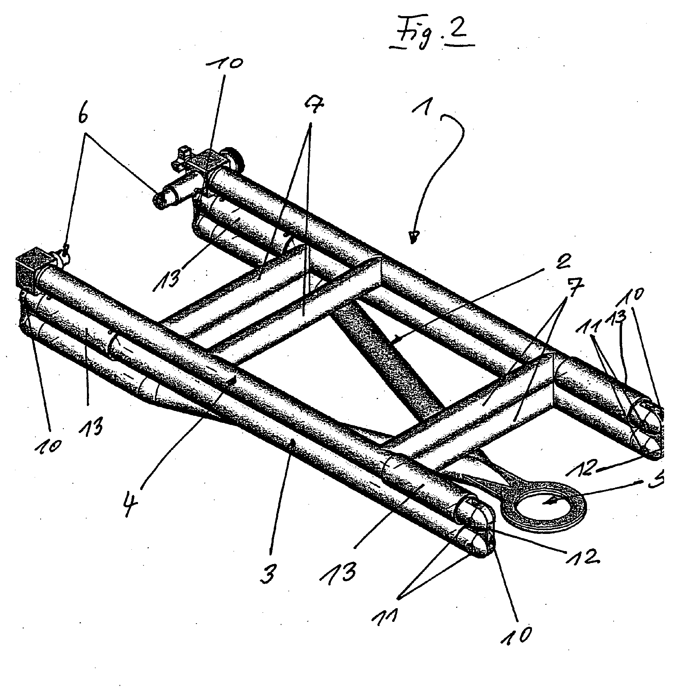

Wie insbesondere aus Figur 2 zu ersehen ist, welche die Flugzeugdeichsel 1 nach Figur 1 im zusammengelegten Zustand zeigt, ist an dem jeweiligen Ende des Deichselabschnittes 2, 3 und 4 eine ingesamt mit 10 bezeichnete Gelenkanordnung vorgesehen. Diese Gelenkanordnung 10 umfaßt wenigstens einen Gelenkbolzen 11 in der Nähe des jeweiligen Endes des Deichselabschnittes 2, 3, 4 und ein Verbindungsglied 5, so daß am Ende vom benachbarten Deichselabschnitt 2, 3, 4 beabstandet zwei Gelenkbolzen 11 angeordnet sind, welche mittels des Verbindungsgliedes 12 mit der Gelenkanordnung 10 verknüpft sind.

Wie aus Figur 2 zu ersehen sind, gestattet diese Gelenkanordnung 10, daß im zusammengelegten Zustand der Flugzeugdeichsel 1 die einzelnen Deichselabschnitte 2, 3, 4 unmittelbar übereinander zu liegen kommen und aufeinander liegen. Hierbei werden die längsten Außenabmessungen von den jeweiligen Enden eines Deichselabschnitts 2, 3, 4 gebildet, so daß sich die erfindungsgemäße Flugzeugdeichsel 1 raumsparend zusammenlegen lässt.

Wie aus den Figuren 1 und 2 zu ersehen ist, wird das jeweilige Gelenk oder die jeweilige Gelenkanordnung 10 an den Verbindungsstellen im ausgefalteten Zustand muffenartig umgriffen. Hierzu ist beispielsweise wie in den Figuren der Zeichnung gezeigt, eine Schiebemuffe 13 vorgesehen, welche längs des Rohrmaterials des jeweiligen Deichselabschnitts 2, 3, 4 verschiebbar ist. Wenn die Flugzeugdeichsel 1 ihren ausgefalteten Zustand nach Figur 1 einnimmt, wird die Schiebemuffe 13 über die benachbarten Gelenkbolzen 11, das ausgefaltete Verbindungsglied 12 und somit über die gesamte Gelenkanordnung 10 geschoben. Hierdurch erhält man eine stabile weitgehend unbewegliche Verbindung der Deichselabschnitte . 2, 3, 4 in ausgefaltetem Zustand, so daß bei der Manövrierung eines nicht näher dargestellten Flugzeugs, insbesondere eines Kleinflugzeugs, Zug- und Druckkräfte zuverlässig trotz der über die Gelenkanordnung 10 verbundenen Deichselabschnitte 2, 3, 4 aufgenommen und übertragen werden können.

Wenn die Flugzeugdeichsel 1 zum Verstauen und Mitführen zusammengelegt werden soll, wird die Schiebemuffe 13 längs des entsprechenden Längsholms des jeweiligen Deichselabschnittes 2, 3, 4 der Flugzeugdeichsel 1 derart verschoben, daß die Gelenkbolzen 11 und das Verbindungsglied 12 der Gelenkanordnung 10 freiliegen, so daß die Deichselabschnitte 2, 3, 4 - wie in Figur 2 - gezeigt, übereinander gelegt werden können.

Natürlich kann die Flugzeugdeichsel 1 auch mehr als drei Deichselabschnitte 2, 3, 4 umfassen, was auch von der Größe des entsprechenden Flugzeugs und dessen Konstruktion abhängig ist.

Wie schematisch in den Figuren der Zeichnung angedeutet ist, kann die jeweilige Gelenkanordnung 10 im ausgefalteten, aber auch im zusammengelegten Zustand der Flugzeugdeichsel 1 arretiert sein. Somit nimmt die Flugzeugdeichsel 1 vorzugsweise in beiden Endzuständen eine stabile Lage ein. Hierdurch können die Handhabung und auch der Transport der Flugzeugdeichsel 1 im zusammengelegten Zustand erleichtert werden, da bei der Handhabung die Deichselabschnitte 2, 3, 4 nicht frei relativ zu einander beweg bar sind, sondern in ihrem jeweiligen Zustand arretiert sind.

Obgleich die Erfindung voranstehend anhand von bevorzugten Ausführungsformen erläutert worden ist, ist die Erfindung natürlich nicht auf die in der Zeichnung dargestellten Einzelheiten beschränkt, sondern es sind zahlreiche Abänderungen und Modifikationen möglich, die der Fachmann im Bedarfsfall treffen wird, ohne den Erfindungsgedanken zu verlassen. So können beispielsweise die Materialien für die einzelnen Deichselabschnitte 2, 3, 4 auch unterschiedliche Abmessungen haben oder sie können sogar unterschiedliche Beschaffenheiten haben, sowie jeweils auf die gewünschten Anforderungen angepasst werden. Auch kann das jeweilige mit dem Bugrad des Flugzeugs zusammenarbeitende Ende des zugeordnetes Deichselabschnittes 4 sowie das Ende des Deichselabschnittes 2 anderweitig ausgestaltet sein, welches zur Verbindung mit einer Schleppeinrichtung, wie einem Schleppfahrzeug, bestimmt ist. Diese Enden können jeweils geeignete und auf den Anwendungsfall abgestimmte Auslegungen haben.

## Patentansprüche

1. Flugzeugdeichsel, insbesondere für Kleinflugzeuge, welche mehrere gelenkig miteinander verbundene Deichselabschnitte (2, 3, 4) aufweist, welche im zusammengelegten Zustand platzsparend im Flugzeug mitführbar ist, wobei die Deichselabschnitte von einem Rohrmaterial gebildet werden und Querverstrebungen (7) umfassen, **dadurch gekennzeichnet, daß** die Gelenke (10) an den Verbindungsstellen im ausgefalteten Zustand muffenartig umgriffen sind.

2. Flugzeugdeichsel nach Anspruch 1, **dadurch gekennzeichnet, daß** die Gelenke (10) im ausgefalteten und/oder im zusammengelegten Zustand der Flugzeugdeichsel (1) arretierbar sind.

3. Flugzeugdeichsel nach Anspruch 1 oder 2, **dadurch gekennzeichnet, daß** zur Arretierung der Deichselabschnitte (2, 3, 4) im ausgefalteten Zustand eine Schiebemuffe (13) das Rohrmaterial umgibt, welche die Gelenke (10) benachbarter Deichselabschnitte (2, 3, 4) im ausgefalteten Zustand umschließt.

4. Flugzeugdeichsel nach einem der vorangehenden Ansprüche, **dadurch gekennzeichnet, daß** die Gelenke (10) der Deichselabschnitte (2, 3, 4) derart ausgelegt sind, daß sie im zusammengelegten Zustand der Deichsel (1) die Deichselabschnitte (2, 3, 4) aufeinander zu liegen kommen.

5. Flugzeugdeichsel nach einem der vorangehenden Ansprüche, **dadurch gekennzeichnet, daß** jedes Gelenk (10) wenigstens einen Gelenkbolzen (11) am jeweiligen Ende von benachbarten Deichselabschnitten (2, 3, 4) umfaßt, und die Gelenkbolzen (11) zweier benachbarter Deichselabschnitte (2, 3, 4) über ein schwenkbewegliches Verbindungsglied (12) verbunden sind.

6. Flugzeugdeichsel nach einem der vorangehenden Ansprüche, **dadurch gekennzeichnet, daß** ein Deichselabschnitt (4) derart ausgelegt ist, daß sein freies Ende mit einem Bugrad des Flugzeugs verbindbar ist.

7. Flugzeugdeichsel nach einem der vorangehenden Ansprüche, **dadurch gekennzeichnet, daß** ein weiterer Deichselabschnitt (2) an seinem freien Ende eine Verbindungseinrichtung (5) für eine Schleppeinrichtung hat.

8. Flugzeugdeichsel nach einem der vorangehenden Ansprüche, **dadurch gekennzeichnet, daß** das Rohrmaterial aus rostfreiem Material hergestellt ist.

9. Flugzeugdeichsel nach einem der vorangehenden Ansprüche, **dadurch gekennzeichnet, daß** das Rohrmaterial der Deichselabschnitte (2, 3, 4) und gegebenenfalls der Querverstrebungen (7) übereinstimmende Querschnittsabmessungen hat.

10. Flugzeugdeichsel nach einem der vorangehenden Ansprüche, **dadurch gekennzeichnet, daß** die Flugzeugdeichsel (1) wenigstens drei gelenkig miteinander verbundene Deichselabschnitte (2, 3, 4) umfaßt.

## Claims

1. An aircraft tow bar, in particular for small aircraft, having a plurality of tow bar sections (2, 3, 4), which are hingedly connected with each other and which, in the folded state, can be carried along in the aircraft in a space-saving manner, wherein the tow bar sections are constituted by a pipe material and have transverse struts (7), **characterized in that** in the folded-open state, the hinges (10) are enclosed in the manner of a bushing at the connection points.

2. The aircraft tow bar in accordance with claim 1, **characterized in that** the hinges (10) can be fixed in place in the folded-open and/or in the folded-together state of the aircraft tow bar (1).

3. The aircraft tow bar in accordance with claim 1 or 2, **characterized in that**, for fixing the tow bar sections (2, 3, 4) in place in the folded-open state, a sliding bushing (13) surrounds the pipe material and encloses the hinges (10) of adjoining tow bar sections (2, 3, 4) in the folded-open state.

4. The aircraft tow bar in accordance with one of the preceding claims, **characterized in that** the hinges (10) of the tow bar sections (2, 3, 4) are designed in such a way that, in the folded-together state of the tow bar (1), the tow bar sections (2, 3, 4) come to rest on top of each other.

5. The aircraft tow bar in accordance with one of the preceding claims, **characterized in that** each hinge (10) has at least one hinge bolt (11) at the respective ends of adjoining tow bar sections (2, 3, 4), and the hinge bolts (11) of two adjoining tow bar sections (2, 3, 4) are connected by means of a pivotably movable connecting member (12).

6. The aircraft tow bar in accordance with one of the preceding claims, **characterized in that** one tow bar section (4) is designed in such a way that its free end can be connected with the nose wheel of the aircraft.

7. The aircraft tow bar in accordance with one of the preceding claims, **characterized in that** a further tow bar section (2) has a connecting arrangement (5) for a towing device on its free end.

8. The aircraft tow bar in accordance with one of the preceding claims, **characterized in that** the pipe material is made of stainless steel.

9. The aircraft tow bar in accordance with one of the preceding claims, **characterized in that** the pipe material of the tow bar sections (2, 3, 4) and, if required, of the transverse struts (7), has matching cross-sectional dimensions.

10. The aircraft tow bar in accordance with one of the preceding claims, **characterized in that** the aircraft tow bar (1) consists of at least three tow bar sections (2, 3, 4), which are hingedly connected with each other.

## Revendications

1. Barre de remorquage d'avion, en particulier pour de petits avions, laquelle comporte plusieurs segments (2, 3, 4) assemblés entre eux de manière articulée et laquelle, dans la position repliée, peut être embarquée dans l'avion en occupant peu de place, les segments de la barre de remorquage étant réalisés dans un matériau tubulaire et étant munis de traverses (7), **caractérisée en ce que** les articulations (10) au niveau des points d'assemblage sont enserrés sous forme de manchons dans la position déployée.

2. Barre de remorquage d'avion selon la revendication 1, **caractérisée en ce que** les articulations (10) peuvent être bloquées dans la position déployée et/ou dans la position repliée de la barre de remorquage (1).

3. Barre de remorquage d'avion selon la revendication 1 ou 2, **caractérisée en ce que** pour le blocage des segments (2, 3, 4) de la barre de remorquage dans la position déployée, un manchon coulissant (13) entoure le matériau tubulaire qui enserre les articulations (10) des segments (2, 3, 4) contigus dans la position déployée.

4. Barre de remorquage d'avion selon l'une quelconque des revendications précédentes, **caractérisée en ce que** les articulations (10) des segments (2, 3, 4) de la barre de remorquage sont réalisées de telle sorte que, dans la position repliée de la barre de remorquage (1), les segments (2, 3, 4) viennent se poser les uns sur les autres.

5. Barre de remorquage d'avion selon l'une quelconque des revendications précédentes, **caractérisée en ce que** chaque articulation (10) comporte au moins un boulon (11) au niveau de l'extrémité respective des segments (2, 3, 4) contigus de la barre de remorquage, et les boulons (11) de deux segments (2, 3, 4) contigus de la barre de remorquage sont reliés par un organe de liaison (12) apte à pivoter.

6. Barre de remorquage d'avion selon l'une quelconque des revendications précédentes, **caractérisée en ce qu'**un segment (4) de la barre de remorquage est conçu de telle sorte que son extrémité libre peut être assemblée à une roue avant de l'avion.

7. Barre de remorquage d'avion selon l'une quelconque des revendications précédentes, **caractérisée en ce qu'**un autre segment (2) de la barre de remorquage comporte au niveau de son extrémité libre un dispositif d'assemblage (5) pour un dispositif de remorquage.

8. Barre de remorquage d'avion selon l'une quelconque des revendications précédentes, **caractérisée en ce que** le matériau tubulaire est réalisé dans un matériau inoxydable.

9. Barre de remorquage d'avion selon l'une quelconque des revendications précédentes, **caractérisée en ce que** le matériau tubulaire des segments (2, 3, 4) de la barre de remorquage et, le cas échéant, celui des traverses (7) ont des sections avec des dimensions concordantes.

10. Barre de remorquage d'avion selon l'une quelconque des revendications précédentes, **caractérisée en ce que** la barre de remorquage (1) comporte au moins trois segments (2, 3, 4) assemblés entre eux de manière articulée.
